(19) Europäisches Patentamt / European Patent Office / Office européen des brevets

(11) **EP 3 451 437 B1**

(12) **EUROPEAN PATENT SPECIFICATION**

(45) Date of publication and mention
of the grant of the patent:
**24.03.2021 Bulletin 2021/12**

(21) Application number: **17788996.1**

(22) Date of filing: **07.02.2017**

(51) Int Cl.:
*H01M 10/44* (2006.01)　　*H01M 4/485* (2010.01)
*H01M 4/505* (2010.01)　　*H01M 10/052* (2010.01)
*H01M 10/0569* (2010.01)　*H01M 10/48* (2006.01)
*H02J 7/04* (2006.01)　　　*H02J 7/10* (2006.01)

(86) International application number:
**PCT/JP2017/004449**

(87) International publication number:
**WO 2017/187707 (02.11.2017 Gazette 2017/44)**

(54) **LITHIUM ION SECONDARY CELL CHARGING METHOD, LITHIUM ION SECONDARY CELL SYSTEM, AND POWER STORAGE DEVICE**

LADEVERFAHREN FÜR LITHIUM-IONEN-SEKUNDÄRZELLE,
LITHIUM-IONEN-SEKUNDÄRZELLENSYSTEM UND ENERGIESPEICHERVORRICHTUNG

PROCÉDÉ DE CHARGE D'ACCUMULATEUR LITHIUM-ION, SYSTÈME D'ACCUMULATEUR
LITHIUM-ION, ET DISPOSITIF DE STOCKAGE D'ÉLECTRICITÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.04.2016 JP 2016091353**

(43) Date of publication of application:
**06.03.2019 Bulletin 2019/10**

(73) Proprietor: **Showa Denko Materials Co., Ltd.
Tokyo 100-6606 (JP)**

(72) Inventor: **GOGYO, Yuma
Tokyo 100-6606 (JP)**

(74) Representative: **Hoffmann Eitle
Patent- und Rechtsanwälte PartmbB
Arabellastraße 30
81925 München (DE)**

(56) References cited:
　**WO-A1-2016/060253　　WO-A1-2016/060253
　JP-A- H01 144 330　　JP-A- H06 315 234
　JP-A- H07 296 853　　JP-A- H07 296 853
　JP-A- 2009 162 750　　US-A1- 2005 221 188
　US-A1- 2010 264 929**

**Description**

Technical Field

The present invention relates to a method for charging a lithium-ion secondary battery, a lithium-ion secondary battery system, and a power storage device.

Background Art

A lithium-ion secondary battery, which is a type of nonaqueous electrolyte secondary batteries, is a secondary battery having a high energy density. By virtue of such characteristics, lithium-ion secondary batteries are used in power supplies of portable devices such as notebook-sized personal computers and mobile phones. In recent years, lithium-ion secondary batteries have also attracted attention as power supplies for electronic devices, power supplies for power storage, power supplies for electric vehicles and the like, which are being downsized, and consequently, there is a demand for lithium-ion secondary batteries having higher energy densities.

Examples of the means for improving the energy density of a lithium-ion secondary battery include using a spinel-type lithium nickel manganese complex oxide, which exhibits a high operating potential, for a positive electrode active material. However, there has been a problem that the high operating potential causes the amount of charged electricity to be partly consumed by oxidative decomposition of an electrolytic solution, which results in deposition of a decomposition product of the electrolytic solution on a positive electrode and a negative electrode, thereby increasing a resistance value and making it difficult to obtain sufficient charge and discharge cycle performance.

As a means to solve the above problem, a method for charging a lithium-ion secondary battery in which, after a constant-current charging process, a current value in a constant-voltage charging process is regulated, has been proposed (see, for example, Patent Document 1).

Related Art Document

Patent Document

Patent Document 1: Japanese Patent Application Laid-Open (JP-A) No. 2005-123090
Patent Document 2: WO2016060253 A1

SUMMARY OF INVENTION

Technical Problem

However, analysis made by the present inventor revealed that there are still cases in which sufficient charge and discharge cycle performance cannot be obtained even by the charging method of Patent Document 1.

An embodiment of the invention was made under such circumstances in order to provide a method for charging a lithium-ion secondary battery, in which charge and discharge cycle performance can be improved even in the case in which a positive electrode active material exhibiting a high operating potential is used, as well as a lithium-ion secondary battery system and a power storage device which use the above method for charging.

Solution to Problem

Specific embodiments for achieving the object are the embodiments as defined in the claims.

Advantageous Effects of Invention

According to an embodiment of the invention, a method for charging a lithium-ion secondary battery, in which charge and discharge cycle performance can be improved even in the case in which a positive electrode active material exhibiting a high operating potential is used, as well as a lithium-ion secondary battery system and a power storage device which use the above method for charging can be provided.

BRIEF DESCRIPTION OF DRAWINGS

Fig. 1 is a perspective view illustrating an example of the configuration of a lithium-ion secondary battery according to the present embodiment.

Fig. 2 is a perspective view illustrating a positive plate, a negative plate, and a separator which constitute the electrode assembly of the lithium-ion secondary battery illustrated in Fig. 1.

DESCRIPTION OF EMBODIMENTS

Hereinafter, embodiments of the present invention will be described in detail. However, the present invention is not limited to the following embodiments. In the following embodiments, the constituent elements (including the element steps and the like) are not indispensable except when particularly explicitly mentioned. The same applies to numerical values and ranges, and the numerical values and ranges do not limit the present invention.

In the present disclosure, numerical ranges specified using "(from) ... to ..." represent ranges including the numerical values noted before and after "to" as the minimum value and the maximum value, respectively.

In the present disclosure, with respect to the numerical ranges stated hierarchically, the upper limit or the lower limit of a numerical range of a certain hierarchical level may be replaced with the upper limit or the lower limit of a numerical range of another hierarchical level. Further, in the present disclosure, with respect to the numerical ranges, the upper limit or the lower limit of a numerical range may be replaced with a value shown in the Examples.

In the present disclosure, unless otherwise specified, each component does not necessarily consist of one substance, and may contain multiple substances.

In referring herein to an amount or a content of a component, when plural kinds of substances exist corresponding to a certain component, the amount or the content means, unless otherwise specified, the total amount or the total content of the plural kinds of substances.

In referring herein to a particle diameter of a component, when plural kinds of particles exist corresponding to a certain component, the particle diameter means, unless otherwise specified, a value with respect to the mixture of the plural kinds of particles.

The term "layer" or "film" comprehends herein not only a case in which the layer or the film is formed over the whole observed region when a region where the layer or the film is present is observed, but also a case in which the layer or the film is formed only on part of the observed region.

The term "layered" as used herein indicates that layers are stacked, in which two or more layers may be bonded or detachable.

In the present disclosure, the "solid mass" of the positive electrode material mixture or the negative electrode material mixture means a remaining component obtained by removing a volatile component such as an organic solvent from the positive electrode material mixture or the negative electrode material mixture.

<Method for charging Lithium-Ion Secondary Battery>

A method for charging a lithium-ion secondary battery according to the present embodiment (hereinafter also referred to as "method for charging according to the present embodiment") is applied to a lithium-ion secondary battery including: a positive electrode including a positive electrode active material including a spinel-type lithium nickel manganese complex oxide; a negative electrode; and an electrolytic solution including a nonaqueous solvent including dimethyl carbonate, wherein the content of the dimethyl carbonate is more than 70% by volume with respect to the total amount of the nonaqueous solvent, and a capacity ratio between the negative electrode capacity of the negative electrode and the positive electrode capacity of the positive electrode (negative electrode capacity/positive electrode capacity) is 1 or less (hereinafter also referred to as "lithium-ion secondary battery according to the present embodiment"). In the method for charging according to the present embodiment, the lithium-ion secondary battery according to the present embodiment is charged by performing constant-current charge until a set voltage is reached, or by performing constant-current charge until a set voltage is reached followed by performing constant-voltage charge at the set voltage for 30 minutes or less.

By this method for charging, charge and discharge cycle performance of the lithium-ion secondary battery according to the present embodiment can be improved. Although the detailed reason why the above-described effect is exhibited is not necessarily clear, the present inventor presumes that the reason is as follows.

During the constant-voltage charge, the potential of the positive electrode is high while the potential of the negative electrode is low. Therefore, the electrolytic solution is prone to be oxidatively decomposed in a positive electrode side and to be reductively decomposed in a negative electrode side. The decomposition of the electrolytic solution results in a decrease in the ion conductivity of the electrolytic solution, thereby increasing a resistance value. The decomposition product of the electrolytic solution develops to form a coating film on an electrode, which also increases the resistance value. Therefore, it is presumed that, by making the time for the constant-voltage charge a short period, charge and discharge cycle performance can be improved.

The time for the constant-voltage charge is preferably 15 minutes or less, and more preferably 10 minutes or less from the viewpoint of further improving the charge and discharge cycle performance. In the method for charging according to the present embodiment, the time for the constant-voltage charge is still more preferably 0 minutes, i.e., the lithium-ion secondary battery according to the present embodiment is still more preferably charged by the constant-current charge.

The set voltage (charge cutoff voltage) in the constant-current charge and the constant-voltage charge is set at from 3.4 V to 3.8 V. In the case of a lithium-ion secondary battery including the positive electrode including a positive electrode active material including a spinel-type lithium nickel manganese complex oxide, and a negative electrode including a negative electrode active material including a lithium titanium complex oxide, the setting of the charge cutoff voltage at 3.4 V or more tends to result in sufficient charge and further improvement in initial capacity. The charge cutoff voltage is more preferably set at 3.5 V or more. By setting the charge cutoff voltage to be at 3.8 V or less, when charging the lithium-ion secondary battery, decomposition of electrolytic solution due to high potential of the positive electrode tends to be suppressed, and charge and discharge cycle performance tends to be improved. The charge cutoff voltage is more preferably set at 3.7 V or less.

The above-described charge cutoff voltage is a voltage per single cell. In the case of an assembled battery including plural cells, the charge cutoff voltage means a voltage set for respective single cells.

Hereinafter, the positive electrode active material and the negative electrode active material used for the lithium-ion secondary battery according to the present embodiment will be described. Overall configuration of the lithium-ion secondary battery will be described thereafter.

[Positive Electrode Active Material]

For a lithium-ion secondary battery in the present embodiment, a positive electrode active material including a spinel-type lithium nickel manganese complex oxide is used. From the viewpoint of improving the energy density, the content of the spinel-type lithium nickel manganese complex oxide with respect to the total amount of the positive electrode active material is preferably from 50% by mass to 100% by mas, more preferably from 60% by mass to 100% by mass, still more preferably from 70% by mass to 100% by mass, and further more preferably from 85% by mass to 100% by mass.

The spinel-type lithium nickel manganese complex oxide is preferably a compound represented by $LiNi_xMn_{2-x}O_4$ ($0.3<X<0.7$), more preferably a compound represented by $LiNi_xMn_{2-x}O_4$ ($0.4<X<0.6$), and from the viewpoint of stability, still more preferably $LiNi_{0.5}Mn_{1.5}O_4$.

For further stabilizing the crystal structure of a spinel-type lithium nickel manganese complex oxide, a spinel-type lithium nickel manganese complex oxide in which Mn, Ni and/or O sites are partially substituted with another element, may be used.

Further, excessive lithium may be made present in a crystal of a spinel-type lithium nickel manganese complex oxide. Furthermore, a spinel-type lithium nickel manganese complex oxide in which O site is made to have a defect may be used.

Examples of a metal element with which a Mn site or a Ni site of a spinel-type lithium nickel manganese complex oxide may be substituted include Ti, V, Cr, Fe, Co, Zn, Cu, W, Mg, Al, and Ru. AMn site or a Ni site of a spinel-type lithium nickel manganese complex oxide may be substituted with one kind, or two or more kinds of these metal elements. Among these substitutable metal elements, Ti is preferable from the viewpoint of further stabilizing the crystal structure of the spinel-type lithium nickel manganese complex oxide.

Examples of other substitutable elements for an O site of a spinel-type lithium nickel manganese complex oxide include F and B. An O site of a spinel-type lithium nickel manganese complex oxide may be substituted with one, or two or more kinds of such other elements. Among such other substitutable elements, F is preferable from the viewpoint of further stabilizing the crystal structure of the spinel-type lithium nickel manganese complex oxide.

From the viewpoint of improving energy density, the electric potential of the spinel-type lithium nickel manganese complex oxide in a full charged state with respect to $Li/Li^+$ (herein also referred to as "lithium potential") is preferably from 4.5 V to 5.1 V, and more preferably from 4.6 V to 5.0 V. The "full charged state" means a state in which a SOC (state of charge) is 100%

From the viewpoint of further improving the storage characteristics, the BET specific surface area of the spinel-type lithium nickel manganese complex oxide is preferably less than 2.9 $m^2/g$, more preferably less than 2.8 $m^2/g$, still more preferably less than 1.5 $m^2/g$, and further more preferably less than 1.0 $m^2/g$. From the viewpoint of further improving the input-output performance, the BET specific surface area of a spinel-type lithium nickel manganese complex oxide is preferably 0.05 m$^2$/g or more, more preferably 0.08 m$^2$/g or more, and still more preferably 0.1 m$^2$/g or more.

The BET specific surface area of the spinel-type lithium nickel manganese complex oxide is preferably 0.05 m$^2$/g or more and less than 2.9 m$^2$/g, more preferably 0.05 m$^2$/g or more and less than 2.8 m$^2$/g, still more preferably 0.08 m$^2$/g or more and less than 1.5 m$^2$/g, and further more preferably 0.1 m$^2$/g or more and less than 1.0 m$^2$/g.

The BET specific surface area may be measured, for example, based on a nitrogen adsorption capacity according to JIS Z 8830:2013. Examples for an evaluation apparatus include an AUTOSORB-1 (trade name) manufactured by Quantachrome Instruments. In measuring the BET specific surface area, since moisture adsorbed on a surface or the structure of a sample may influence the gas adsorption capacity, it is preferable that a pretreatment for removing moisture by heating is performed first. In the pretreatment, a cell for the measurement loaded with 0.05 g of a measurement sample is evacuated by a vacuum pump such that the pressure is reduced to 10 Pa or less, then heated at 110°C for a duration of 3 hours or longer, and cooled naturally to room temperature (25°C) while maintaining the reduced pressure. After the pretreatment, the measurement temperature is lowered to 77K and a measurement is conducted at a measurement pressure range of less than 1 in terms of relative pressure, which is an equilibrium pressure with respect to a saturated vapor pressure.

From the viewpoint of further improving the dispersibility of the particles, the median diameter D50 of the particles of the spinel-type lithium nickel manganese complex oxide (in a case in which primary particles aggregate to form secondary particles, the median diameter D50 means the median diameter D50 of the secondary particles) is preferably from 0.5 $\mu$m to 100 $\mu$m, and more preferably from 1 $\mu$m to 50 $\mu$m.

A median diameter D50 may be determined from a particle size distribution obtained by a laser diffraction scattering method. Specifically, a lithium nickel manganese complex oxide is added into pure water such that the content of the lithium nickel manganese complex oxide becomes 1% by mass, and dispersed ultrasonically for 15 min, and then a measurement by a laser diffraction scattering method is performed.

A positive electrode active material in a lithium-ion secondary battery in the present embodiment may include a positive electrode active material other than the spinel-type lithium nickel manganese complex oxide.

Examples of a positive electrode active material other than the spinel-type lithium nickel manganese complex oxide include $Li_xCoO_2$, $Li_xNiO_2$, $Li_xMnO_2$, $Li_xCo_yNi_{1-y}O_2$, $Li_xCo_yM^1_{1-y}O_z$ (in the formula, $M^1$ represents at least one element selected from the group consisting of Na, Mg, Sc, Y, Mn, Fe, Cu, Zn, Al, Cr, Pb, Sb, V, and B), $Li_xNi_{1-y}M^2_yO_z$ (in the formula, $M^2$ represents at least one element selected from the group consisting of Na, Mg, Sc, Y, Fe, Co, Cu, Zn, Al, Cr, Pb, Sb, V, and B), $Li_xMn_2O_4$ and $Li_xMn_{2-y}M^3_yO_4$ (in the formula, $M^3$ represents at least one element selected from the group consisting of Na, Mg, Sc, Y, Fe, Co, Cu, Zn, Al, Cr, Pb, Sb, V, and B). In each Formula, x satisfies $0 < x \leq 1.2$, y satisfies $0 \leq y \leq 0.9$, and z satisfies $2.0 \leq z \leq 2.3$. The x value, which represents a molar ratio of lithium, increases or decreases by charge and discharge.

When a positive electrode active material other than the spinel-type lithium nickel manganese complex oxide is included as a positive electrode active material, a BET specific surface area of the positive electrode active material other than the spinel-type lithium nickel manganese complex oxide is, from the viewpoint of further improving the storage characteristics, preferably less than 2.9 m$^2$/g, more preferably less than 2.8 m$^2$/g, still more preferably less than 1.5 m$^2$/g, and further more preferably less than 1.0 m$^2$/g. From the viewpoint of further improving the input-output performance, the BET specific surface area of the positive electrode active material other than the spinel-type lithium nickel manganese complex oxide is preferably 0.05 m$^2$/g or more, more preferably 0.08 m$^2$/g or more, and still more preferably 0.1 m$^2$/g or more.

The BET specific surface area of the positive electrode active material other than the spinel-type lithium nickel manganese complex oxide is preferably 0.05 m$^2$/g or more and less than 2.9 m$^2$/g, more preferably 0.05 m$^2$/g or more and less than 2.8 m$^2$/g, still more preferably 0.08 m$^2$/g or more and less than 1.5 m$^2$/g, and further more preferably 0.1 m$^2$/g or more and less than 1.0 m$^2$/g.

The BET specific surface area of the positive electrode active material other than the spinel-type lithium nickel manganese complex oxide may be measured by the same method as used for the spinel-type lithium nickel manganese complex oxide.

When a positive electrode active material other than the spinel-type lithium nickel manganese complex oxide is included as a positive electrode active material, the median diameter D50 of the particles of the positive electrode active material other than the spinel-type lithium nickel manganese complex oxide (in a case in which primary particles aggregate to form secondary particles, the median diameter D50 means the median diameter D50 of the secondary particles) is, from the viewpoint of further improving the dispersibility of the particles, preferably from 0.5 $\mu$m to 100 $\mu$m, and more preferably from 1 $\mu$m to 50 $\mu$m.

The median diameter D50 of the particles of the particles of the positive electrode active material other than the spinel-type lithium nickel manganese complex oxide may be measured by the same method as used for the spinel-type lithium nickel manganese complex oxide.

[Negative Electrode Active Material]

The negative electrode active material in the present embodiment includes a lithium titanium complex oxide and may include a molybdenum oxide, an iron sulfide, a titanium sulfide, and a carbon material. From the viewpoint of further improving the energy density, the content of the lithium titanium complex oxide with respect to the total amount of the negative electrode active material is preferably from 50% by mass to 100% by mass, more preferably from 70 % by mass to 100% by mass, and still more preferably from 80% by mass to 100% by mass.

The negative electrode active material preferably includes an active material that allows intercalation and deintercalation of lithium ions at a potential of 1.2 V or more compared to the lithium potential (hereinafter also referred to as a "specific negative electrode active material"). Specifically, the negative electrode active material preferably includes "active material that allows intercalation reaction and deintercalation reaction of lithium ions with an electrochemical capacity of at least 100 mAh/g or more per unit mass of the active material at a potential of 1.2 V or more compared to the lithium potential".

In a case in which the negative electrode active material includes a specific negative electrode active material, the lithium-ion secondary battery according to the present embodiment substantially acts as a "battery" at a negative electrode potential of 1.2 V or more compared to the lithium potential. For a negative electrode to include a negative electrode active material that allows intercalation and deintercalation of lithium ions at a potential of 1.2 V or more compared to the lithium potential, when the lithium-ion secondary battery is discharged under normal working conditions, 50% or more of the amount of the discharged electricity corresponds to a negative electrode operating area where the potential of the negative electrode is 1.2 V or more. In other words, the operating potential of the negative electrode is substantially 1.2 V (vs. Li/Li$^+$) or more. For example, when a lithium-ion secondary battery in which graphite is used for the negative electrode is overdischarged, even if the potential of the negative electrode is increased to reach 1.2 V or more compared to the lithium potential, this battery is not, in substance, considered to be a lithium-ion secondary battery that acts at a negative electrode potential of 1.2 V or more compared to the lithium potential.

Examples of the specific negative electrode active material, apart from lithium titanium composite oxides, include molybdenum oxide, iron sulfide, and titanium sulfide. The content of the specific negative electrode active material with respect to the negative electrode active material is preferably from 50% by mass to 100% by mass, more preferably from 70% by mass to 100% by mass, and still more preferably from 80% by mass to 100% by mass from the viewpoint of further improving the energy density.

The lithium titanium complex oxide used as a negative electrode active material is preferably a spinel-type lithium titanium complex oxide. The fundamental composition formula of the spinel-type lithium titanium complex oxide is expressed as Li [Li$_{1/3}$Ti$_{5/3}$] O$_4$.

For further stabilizing the crystal structure of the spinel-type lithium titanium complex oxide, a part of a Li site, a Ti site, or a O site of a spinel-type lithium titanium complex oxide may be substituted with another element.

Further, excessive amount of lithium may be made present in a crystal of the spinel-type lithium titanium complex oxide. Furthermore, a spinel-type lithium titanium complex oxide in which O site is made to have a defect, may be used.

Examples of the "another element" which may substitute a Li site or a Ti site of the spinel-type lithium titanium complex oxide include Nb, V, Mn, Ni, Cu, Co, Zn, Sn, Pb, Al, Mo, Ba, Sr, Ta, Mg, and Ca. The Li site or the Ti site of the spinel-type lithium titanium complex oxide may be substituted with one kind, or two or more kinds of these elements.

Examples of the "another element" which may substitute an O site of the spinel-type lithium titanium complex oxide include F and B. An O site of a spinel-type lithium titanium complex oxide may be substituted with one kind, or two or more kinds of such other elements.

From the viewpoint of further improving the storage characteristics, the BET specific surface area of the negative electrode active material is preferably less than 40 m$^2$/g, more preferably less than 30 m$^2$/g, still more preferably less than 20 m$^2$/g, and further more preferably less than 15 m$^2$/g. From the viewpoint of improving input-output performance, the BET specific surface area of the negative electrode active material is preferably 0.1 m$^2$/g or more, more preferably 0.5 m$^2$/g or more, and still more preferably 1 m$^2$/g or more.

The BET specific surface area of the negative electrode active material is preferably 0.1 m$^2$/g or more and less than 40 m$^2$/g, more preferably 0.1 m$^2$/g or more and less than 30 m$^2$/g, still more preferably 0.5 m$^2$/g or more and less than 20 m$^2$/g, and further more preferably 1 m$^2$/g or more and less than 15 m$^2$/g.

The BET specific surface area of the negative electrode active material may be measured by the same method as used for the spinel-type lithium nickel manganese complex oxide.

From the viewpoint of further improving the dispersibility of the particles, the median diameter D50 of the particles of a negative electrode active material (in a case in which primary particles aggregate to form secondary particles, the median diameter D50 means the median diameter D50 of the secondary particles) is preferably from 0.5 μm to 100 μm, and more preferably from 1 μm to 50 μm.

A median diameter D50 of the particles of the negative electrode active material may be measured by the same method as used for a spinel-type lithium nickel manganese complex oxide.

[Overall Configuration of Lithium-Ion Secondary Battery]

A lithium-ion secondary battery according to the present embodiment includes a positive electrode, a negative electrode, and an electrolytic solution. A separator is interposed between the positive electrode and the negative electrode.

(Positive Electrode)

The positive electrode includes, for example, a current collector and a positive electrode material mixture layer formed on both sides or one side of the current collector. The positive electrode material mixture layer includes the positive electrode active material described above.

Examples of a material for the current collector of the positive electrode include aluminum, titanium, stainless steel, and nickel.

The positive electrode may be formed, for example, by mixing a positive electrode active material including a spinel-type lithium nickel manganese complex oxide with a conductive material, adding an appropriate binder and an appropriate solvent to the resultant mixture, if necessary, to prepare a pasty positive electrode material mixture, applying the pasty positive electrode material mixture to a surface of the current collector, drying the pasty positive electrode material mixture to form a positive electrode material mixture layer, and then increasing the density of the positive electrode material mixture layer by pressing or the like, if necessary.

Examples of the conductive material include a powdery carbon substance such as carbon black, acetylene black, ketjen black, and graphite. One conductive material may be used singly, or two or more conductive materials may be used in combination. Of these conductive materials, acetylene black is preferred from the viewpoint of further improving the input-output characteristics.

The content of the conductive material is preferably 3% by mass or more, more preferably 4% by mass or more, and still more preferably 4.5% by mass or more, with respect to the total solid content of the positive electrode material mixture from the viewpoint of further improving the input-output characteristics. The content of the conductive material is preferably 10% by mass or less, more preferably 9% by mass or less, and still more preferably 8.5% by mass or less with respect to the total solid content of the positive electrode material mixture from the viewpoint of further enhancing a battery capacity.

The content of the conductive material is preferably from 3% by mass to 10% by mass, more preferably from 4% by mass to 9% by mass, and still more preferably from 4.5% by mass to 8.5% by mass, with respect to the total solid content of the positive electrode material mixture.

The binder is not particularly restricted, and is preferably a material having favorable solubility or favorable dispersibility in a solvent. Specific examples thereof include: a resin polymer such as polyethylene and polypropylene; a rubber polymer such as SBR (styrene-butadiene rubber) and NBR (acrylonitrile-butadiene rubber); a fluorinated polymer such as polyvinylidene fluoride (PVdF) and polytetrafluoroethylene; and a copolymer in which acrylate and a linear ether group are added to a polyacrylonitrile backbone. One binder may be used singly, or two or more binders may be used in combination. Of these binders, polyvinylidene fluoride (PVdF) or a copolymer in which acrylate and a linear ether group are added to a polyacrylonitrile backbone is preferred from the viewpoint of further improving the adhesiveness of the positive electrode material mixture layer, and a copolymer in which acrilate and a linear ether group are added to a polyacrylonitrile backbone is more preferred from the viewpoint of further improving the charge and discharge cycle performance.

The content of the binder is preferably 0.1% by mass or more, more preferably 1% by mass or more, and still more preferably 2% by mass or more, with respect to the total solid content of the positive electrode material mixture, from the viewpoint of sufficient binding of the positive electrode active material in order to further enhance the mechanical strength of the positive electrode and to further stabilize the battery performance such as charge and discharge cycle performance. The content of the binder is preferably 30% by mass or less, more preferably 20% by mass or less, and still more preferably 10% by mass or less with respect to the total solid content of the positive electrode material mixture, from the viewpoint of further enhancing the battery capacity and further improving conductivity.

The content of the binder is preferably from 0.1% by mass to 30% by mass, more preferably from 1% by mass to 20% by mass, and still more preferably from 2% by mass to 10% by mass, with respect to the total solid content of the positive electrode material mixture.

Examples of a solvent for dispersing the positive electrode active material, the conductive material, the binder, and the like include an organic solvent such as N-methyl-2-pyrrolidone.

The amount of the positive electrode material mixture applied to one side of the current collector is preferably from 100 g/m$^2$ to 250 g/m$^2$, more preferably from 110 g/m$^2$ to 200 g/m$^2$, and still more preferably from 130 g/m$^2$ to 170 g/m$^2$ in terms of the solid content of the positive electrode material mixture from the viewpoint of further improving the energy density and input-output characteristics.

The density of the positive electrode material mixture layer is preferably from 1.8 g/cm$^3$ to 3.3 g/cm$^3$, more

preferably from 2.0 g/cm$^3$ to 3.2 g/cm$^3$, and still more preferably from 2.2 g/cm$^3$ to 2.8 g/cm$^3$ in terms of the solid content of the positive electrode material mixture from the viewpoint of further improving the energy density and input-output characteristics.

(Negative Electrode)

The negative electrode includes, for example, a current collector and a negative electrode material mixture layer formed on both sides or one side of the current collector. The negative electrode material mixture layer includes the negative electrode active material described above.

Examples of a material for the current collector of the negative electrode include copper, stainless steel, nickel, aluminum, titanium, and conductive polymers.

The negative electrode may be formed, for example, by mixing a negative electrode active material with a conductive material, adding an appropriate binder and an appropriate solvent to the resultant mixture, if necessary, to prepare a pasty negative electrode material mixture, applying the pasty negative electrode material mixture to a surface of the current collector, drying the pasty negative electrode material mixture to form a negative electrode material mixture layer, and then increasing the density of the negative electrode material mixture layer by pressing or the like, if necessary.

Examples of the conductive material include the same conductive materials as those which may be used for the positive electrode.

The content of the conductive material is preferably 1% by mass or more, more preferably 2% by mass or more, and still more preferably 3% by mass or more, with respect to the total solid content of the negative electrode material mixture, from the viewpoint of further improving the input-output characteristics. The content of the conductive material is preferably 15% by mass or less, more preferably 12% by mass or less, and still more preferably 10% by mass or less, with respect to the total solid content of the negative electrode material mixture, from the viewpoint of further enhancing the battery capacity.

The content of the conductive material is preferably from 1% by mass to 15% by mass, more preferably from 2% by mass to 12% by mass, and still more preferably from 3% by mass to 10% by mass with respect to the total solid content of the negative electrode material mixture.

Examples of the binder include the same binders as those which may be used for the positive electrode.

The content of the binder is preferably 0.1% by mass or more, more preferably 0.5% by mass or more, and still more preferably 1% by mass or more, with respect to the total solid content of the negative electrode material mixture, from the viewpoint of sufficient binding of the negative electrode active material in order to further enhance the mechanical strength of the negative electrode and to further stabilize battery performance such as charge and discharge cycle performance. The content of the binder is preferably 40% by mass or less, more preferably 25% by mass or less, and still more preferably 15% by mass or less, with respect to the total solid content of the negative electrode material mixture, from the viewpoint of further enhancing a battery capacity and further improving the conductivity.

The content of the binder is preferably from 0.1% by mass to 40% by mass, more preferably from 0.5% by mass to 25% by mass, and still more preferably from 1% by mass to 15% by mass with respect to the total solid content of the negative electrode material mixture.

Examples of a solvent for dispersing the negative electrode active material, the conductive material, the binder, and the like include an organic solvent such as N-methyl-2-pyrrolidone.

The amount of the negative electrode material mixture applied to one side of the current collector is preferably from 10 g/m$^2$ to 225 g/m$^2$, more preferably from 50 g/m$^2$ to 200 g/m$^2$, and still more preferably from 80 g/m$^2$ to 160 g/m$^2$ in terms of the solid content of the negative electrode material mixture, from the viewpoint of further improving the energy density and input-output characteristics.

The density of the negative electrode material mixture layer is preferably from 1.0 g/cm$^3$ to 3.3 g/cm$^3$, more preferably from 1.2 g/cm$^3$ to 3.2 g/cm$^3$, and still more preferably from 1.4 g/cm$^3$ to 2.8 g/cm$^3$ in terms of the solid content of the negative electrode material mixture, from the viewpoint of further improving the energy density and input-output characteristics.

(Separator)

The separator is not particularly restricted as long as the separator has ion permeability while electronically insulating the positive electrode and the negative electrode from each other and has resistance to oxidizing environment in a positive electrode side and to reducing environment in a negative electrode side. Examples of a material for the separator satisfying such characteristics include a resin, an inorganic substance, or the like.

Examples of the resin include an olefinic polymer, a fluorine polymer, a cellulosic polymer, a polyimide, and a nylon. Especially, it is preferable that the resin is selected from materials that are stable in the electrolytic solution and has an excellent liquid retention property, and polyolefins such as polyethylene and polypropylene are more preferable.

Examples of the shape of the separator include a porous sheet and a non-woven fabric.

Examples of the inorganic substance include: an oxide such as alumina and silicon dioxide; a nitride such as aluminum nitride and silicon nitride; a sulfate such as barium sulfate and calcium sulfate; and glass. For example, a substrate having a thin-film shape, such as a non-woven fabric, a woven fabric, or a microporous film, to which the inorganic substance having a fiber shape or a particle shape is attached may be used as the separator. For the substrate having a thin-film shape, a substrate having a pore diameter of from 0.01 μm to 1 μm and a thickness of from 5 μm to 50 μm is preferably used.

Further, for example, a complex porous layer formed from the inorganic substance having a fiber shape or a particle shape using a binder such as a resin may be used as the separator. Here, the complex porous layer may also be formed on a surface of the positive electrode or the negative electrode. Further, the complex porous layer may be formed on the surface of another separator to form a multilayered separator. For example, a complex porous layer, formed by binding alumina particles having a 90% particle diameter (D 90) of less than 1 μm with a fluorine resin as a binder, may be formed on a surface of the positive electrode, or on a surface of the separator facing the positive electrode.

(Electrolytic Solution)

The electrolytic solution includes a lithium salt (electrolyte) and a nonaqueous solvent in which the lithium salt is dissolved. The electrolytic solution includes a nonaqueous solvent including dimethyl carbonate (DMC), and the content of the dimethyl carbonate is more than 70% by volume with respect to the total amount of the nonaqueous solvent. When the content of the dimethyl carbonate is more than 70% by volume with respect to the total amount of the nonaqueous solvent, charge and discharge cycle performance tends to be improved.

The content of dimethyl carbonate is preferably 75% by volume or more, more preferably 85% by volume or more, and still more preferably 90% by volume or more, with respect to the total amount of the nonaqueous solvent. The content of dimethyl carbonate with respect to the total amount of the nonaqueous solvent may be 100% by volume, and is preferably 95% by volume or less from the viewpoint of further improving safety.

Due to excellent oxidation resistance, dimethyl carbonate is less likely to decompose even if a high-potential positive electrode, such as a positive electrode including a positive electrode active material including a spinel-type lithium nickel manganese complex oxide, is used. In the lithium-ion secondary battery according to the present embodiment, a capacity ratio between the negative electrode capacity of the negative electrode and the positive electrode capacity of the positive electrode (negative electrode capacity/positive electrode capacity) is 1 or less, and therefore, there are cases in which the potential of the negative electrode is decreased to 1.4 V or less compared to the lithium potential when the lithium-ion secondary battery is charged. However, dimethyl carbonate also has excellent reduction resistance, and therefore, is less likely to be reductively decomposed even on a negative electrode using a lithium titanium complex oxide or the like as a negative electrode active material.

The electrolytic solution may include a nonaqueous solvent other than dimethyl carbonate. Examples of the nonaqueous solvent other than dimethyl carbonate include ethylene carbonate (EC), diethyl carbonate (DEC), propylene carbonate (PC), trifluoroethyl phosphate (TFEP), ethylmethyl sulfone (EMS), vinylene carbonate (VC), methylethyl carbonate, γ-butyrolactone, acetonitrile, 1,2-dimethoxyethane, dimethoxymethane, tetrahydrofuran, dioxolane, methylene chloride, and methyl acetate.

In a case in which the nonaqueous solvent includes a nonaqueous solvent other than dimethyl carbonate, the content of the nonaqueous solvent other than dimethyl carbonate is less than 30% by volume, preferably 25% by volume or less, more preferably 15% by volume or less, and still more preferably 10% by volume or less, with respect to the total amount of the nonaqueous solvent. The content of the nonaqueous solvent other than dimethyl carbonate may be 0% by volume, and is preferably 5% by volume or more from the viewpoint of further improving safety.

Examples of the lithium salt include $LiPF_6$, $LiBF_4$, LiFSI (lithium bis(fluorosulfonyl)imide), LiTFSI (lithium bis(trifluoromethane sulfonyl)imide), $LiClO_4$, $LiB(C_6H_5)_4$, $LiCH_3SO_3$, $LiCF_3SO_3$, and $LiN(SO_2CF_2CF_3)_2$. One lithium salt may be used singly, or two or more lithium salts may be used in combination.

Among them, $LiPF_6$ is preferable, judging comprehensively by e.g., solubility to the nonaqueous solvent, as well as charge-discharge characteristics, input-output characteristics, and charge and discharge cycle performance in the case in which a lithium-ion secondary battery is produced.

The concentration of the lithium salt in the electrolytic solution is preferably from 0.8 mol/L to 2.0 mol/L, more preferably from 1.0 mol/L to 2.0 mol/L, and still more preferably from 1.2 mol/L to 2.0 mol/L from the viewpoint of further improving safety. By making the concentration of the lithium ion as high as 1.2 mol/L to 2.0 mol/L, the flash point tends to be increased, which tends to increase safety of the electrolytic solution.

The electrolytic solution may include an additive, if necessary. Including an additive in the electrolytic solution tends to enable further improvement in storage characteristics at high temperature, charge and discharge cycle performance, and input-output characteristics.

The additive is not particularly restricted as long as it is an additive for an electrolytic solution of a lithium-ion secondary battery. Specific examples thereof include a heterocyclic compound containing nitrogen, sulfur, or nitrogen and sulfur, a cyclic carboxylate ester, a fluorine-containing cyclic carbonate, a fluorine-containing borate ester, and a compound having an unsaturated bond in the molecule. In addition to the additive described above, other additives such as an overcharge inhibitor, a negative electrode film forming agent, a positive electrode protection agent, or a high input/output agent may be used depending on a desired function.

(Capacity Ratio between Negative electrode Capacity and Positive Electrode Capacity)

In the lithium-ion secondary battery according to the present embodiment, a capacity ratio between the negative electrode capacity of the negative electrode and the positive electrode capacity of the positive electrode (negative electrode capacity/positive electrode capacity) is 1 or less, from the viewpoint of improving charge and discharge cycle performance and energy density. A capacity ratio between the negative electrode capacity and the positive electrode capacity (negative electrode capacity/positive electrode capacity) of 1 or less tends to suppress decomposition reaction of the electrolytic solution caused by high potential of the positive electrode, thereby improving the charge and discharge cycle performance of the lithium-ion secondary battery.

The capacity ratio between the negative electrode capacity and the positive electrode capacity (negative electrode capacity/positive electrode capacity) is preferably from 0.6 to less than 1. A capacity ratio between the negative electrode capacity and the positive electrode capacity (negative electrode capacity/positive electrode capacity) of 0.6 or more tends to further increase the battery capacity and further improves the volume energy density. The capacity ratio between the negative electrode capacity and the positive electrode capacity (negative electrode capacity/positive electrode capacity) is more preferably from 0.7 to 0.98, and is still more preferably from 0.75 to 0.95 from the viewpoint of further improving the volume energy density and input characteristics.

A "positive electrode capacity" and a "negative electrode capacity" respectively means reversibly available maximum capacity that can be obtained when an electrochemical cell is constructed of which a metallic lithium is used for the counter electrode, and constant-current charge/constant-current discharge is performed.

Further, a negative electrode capacity represents [discharge capacity of a negative electrode], and a positive electrode capacity represents [discharge capacity of a positive electrode]. Herein, [discharge capacity of a negative electrode] is defined as a capacity calculated by a charge/discharge device when lithium ions intercalated into a negative electrode active material are deintercalated. In addition, [discharge capacity of a positive electrode] is defined as a capacity calculated by a charge/discharge device when lithium ions are deintercalated from a positive electrode active material.

For example, in the case in which a spinel-type lithium nickel manganese complex oxide is used for a positive electrode active material and a lithium titanium complex oxide is used for an negative electrode active material, the "positive electrode capacity" and the "negative electrode capacity" are defined as capacities evaluated by performing charge and discharge in the above electrochemical cell, with a voltage range set from 4.95 V to 3.5 V and from 1.0 V to 2.0 V, respectively, and a current density set at 0.1 mA/cm$^2$ in constant-current charge and constant-current discharge.

In the above electrochemical cell, the direction in which lithium ions are intercalated into the negative electrode active material is defined as "charge", and the direction in which lithium ions are deintercalated therefrom is defined as "discharge". In the above electrochemical cell, the direction in which lithium ions are deintercalated from the positive electrode active material is defined as "charge", and the direction in which lithium ions are intercalated thereinto is defined as "discharge".

In the lithium-ion secondary battery according to the present embodiment, the positive electrode capacity tends to increase by increasing the amount of the positive electrode active material included in the positive electrode, and tends to decrease by decreasing the amount of the positive electrode active material. Similarly to the positive electrode capacity, the negative electrode capacity increases and decreases depending on the amount of the negative electrode active material. The capacity ratio between the negative electrode capacity and the positive electrode capacity (negative electrode capacity/positive electrode capacity) of the lithium-ion secondary battery according to the present embodiment can be adjusted to 1 or less by adjusting the positive electrode capacity and the negative electrode capacity.

(Forms and the Like of Lithium-Ion Secondary Battery)

The lithium-ion secondary battery according to the present embodiment may have various forms such as a lamination type, a winding type (cylindrical type), and a coin type. Regardless of these forms, a lithium-ion secondary battery is produced by interposing the separator between the positive electrode and the negative electrode to form an electrode body, connecting, by a lead for power collection or the like, from the current collector of the positive electrode and the current collector of the negative electrode, to a positive electrode terminal and a negative electrode terminal, which extend to the exterior, and enclosing the electrode body, together with the electrolytic solution, in a battery case.

An example of a configuration in a case in which the lithium-ion secondary battery according to the present embodiment has a lamination type will be described below. However, the form of the lithium-ion secondary battery according to the present embodiment is not limited to the lamination type. Examples of a lithium-ion secondary battery having other forms include a winding-type lithium-ion secondary battery in which a laminated body formed by layering a positive plate and a negative plate with a separator interposed therebetween is wound.

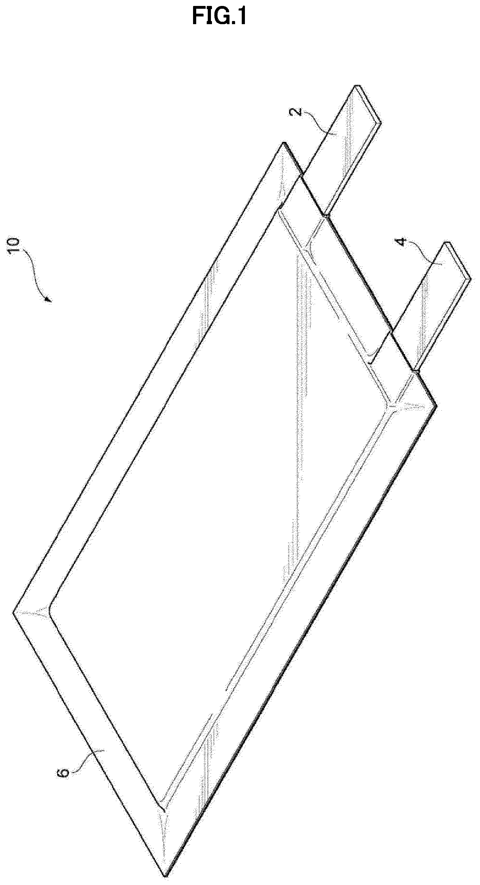

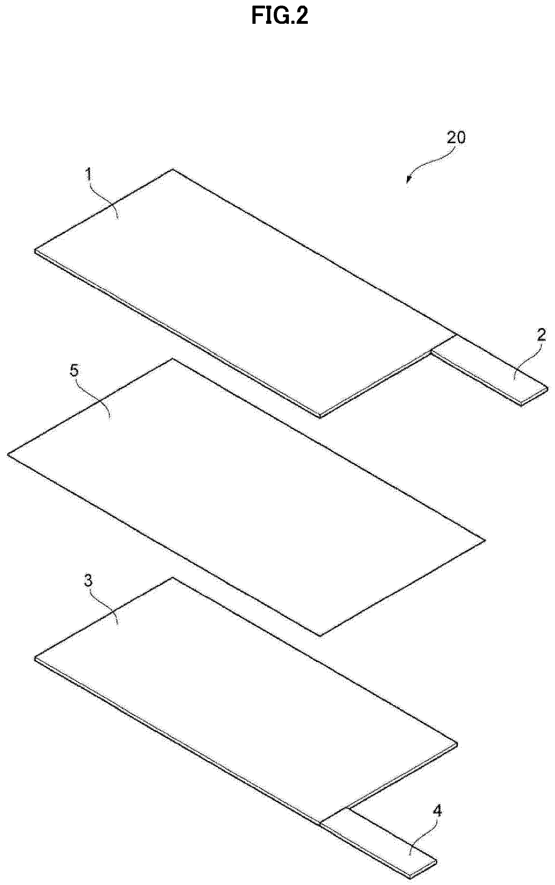

Fig. 1 is a perspective view illustrating an example of the configuration of the lithium-ion secondary battery according to the present embodiment. Fig. 2 is a perspective view illustrating a positive plate, a negative plate, and a separator included in the electrode assembly of the lithium-ion secondary battery of Fig. 1.

The sizes of members in each drawing are conceptual, and the relative relationships in the sizes of the members are not limited thereto. In all of the drawings, members having substantially the same functions may be denoted by the same reference numerals, and the overlapping description thereof may be omitted.

In a lithium-ion secondary battery 10 of Fig. 1, an electrode assembly 20 and an electrolytic solution are housed in a battery outer package 6 which is a laminate film, and a positive electrode collector tab 2 and a negative electrode collector tab 4 are configured to extend to the exterior of the battery outer package 6.

In the electrode assembly 20, a positive plate 1 to which the positive electrode collector tab 2 is attached, a separator 5, and a negative plate 3 to which the negative electrode collector tab 4 is attached are layered, as illustrated in Fig. 2. The sizes, shapes, and the like of the positive plate, the negative plate, the separator, the electrode assembly, and the battery may be arbitrary, and are not limited to those illustrated in Fig. 1 and Fig. 2.

Examples of the material of the battery outer package 6 include aluminum, copper, and stainless steel.

<Lithium-Ion Secondary Battery System>

A lithium-ion secondary battery system according to the present embodiment includes the lithium-ion secondary battery according to the present embodiment and a charge controller configured to charge the lithium-ion secondary battery according to the present embodiment by the method for charging according to the present embodiment. The charge controller may include a control IC (Integrated Circuit) or the like. The lithium-ion secondary battery system according to the present embodiment enables the charge and discharge cycle performance of the lithium-ion secondary battery according to the present embodiment to be improved.

The number of lithium-ion secondary batteries included in the lithium-ion secondary battery system according to the present embodiment may be one or plural. In a case in which the plural lithium-ion secondary batteries exist, the plural lithium-ion secondary batteries may be connected in series, may be connected in parallel, or may be connected in series and parallel.

<Power Storage Device>

A power storage device according to the present embodiment includes the lithium-ion secondary battery system according to the present embodiment. As described above, the lithium-ion secondary battery system according to the present embodiment enables charge and discharge cycle performance of the lithium-ion secondary battery according to the present embodiment to be improved. Accordingly, the power storage device according to the present embodiment enables electric power stored in the lithium-ion secondary battery to be efficiently supplied to various devices.

Examples

The invention will be further described in detail below with reference to Examples. However, the invention is not limited to the following Examples.

[Examples 1 to 6 and Comparative Examples 1 to 2]

(Production of Positive plate and Negative plate)

A pasty positive electrode material mixture was obtained by mixing 93 parts by mass of a spinel-type lithium nickel manganese complex oxide ($LiNi_{0.5}Mn_{1.5}O_4$) as a positive electrode active material, 5 parts by mass of acetylene black (manufactured by Denka Company Limited) as a conductive material, and 2 parts by mass of a copolymer in which acrylate and a linear ether group were added to a polyacrylonitrile backbone (binder resin composition of Synthesis Example 1) as a binder, adding an appropriate amount of N-methyl-2-pyrrolidone to the resulting mixture, and kneading the resultant. The positive electrode material mixture was substantially uniformly and homogeneously applied to one side of a current collector for a positive electrode, which is an aluminum foil having a thickness of 20 $\mu$m, the amount of the positive electrode material mixture being 140 g/m$^2$ in terms of the solid content of the positive electrode material mixture. Then, drying treatment was performed to obtain a dry coating film. The dry coating film was consolidated by pressing until the density of the dry coating film reached 2.3 g/cm$^3$ in terms of the solid content of the positive electrode material mixture, to produce a sheet-type positive electrode. The thickness of the positive electrode material mixture layer was 60 $\mu$m. The positive electrode was cut into a positive plate having a width of 31 mm and a length of 46 mm, and a positive electrode collector tab was attached to the positive plate as illustrated in Fig. 2.

A pasty negative electrode material mixture was obtained by mixing 91 parts by mass of lithium titanate (LTO), which is one type of lithium titanium composite oxides, as a negative electrode active material, 4 parts by mass of acetylene black (manufactured by Denka Company Limited) as a conductive material, and 5 parts by mass of polyvinylidene fluoride as a binder, adding an appropriate amount of N-methyl-2-pyrrolidone, and kneading the resultant. The negative electrode material mixture was applied to one side of a copper foil having a thickness of 10 $\mu$m as a current collector for a negative electrode, the amount of the negative electrode material mixture being 85 g/m$^2$ in terms of the solid content of the negative electrode material mixture. Then, drying treatment was performed to obtain a dry coating film. The dry coating film was consolidated by pressing until the density of the dry coating film reached 1.9 g/cm$^3$ in terms of the solid content of the negative electrode material mixture, to thereby produce a sheet-type negative electrode. The thickness of the negative electrode material mixture layer was 45 $\mu$m. The negative electrode was cut into a negative plate having width of 30 mm and a length of 45 mm, and a negative electrode collector tab was attached to the negative plate as illustrated in Fig. 2.

The synthesis example of the binder used in the positive electrode will be described below.

<Synthesis Example 1>

In a 3-liter separable flask equipped with a stirring machine, a thermometer, a cooling pipe, and a nitrogen gas introduction pipe, 1804 g of purified water was poured. The temperature of the purified water was raised to 74°C while stirring the purified water under a condition of a nitrogen gas flow rate of 200 mL/min, and thereafter flow of nitrogen gas was stopped. Then, an aqueous solution obtained by dissolving 0.968 g of ammonium persulfate as a polymerization initiator in 76 g of purified water was added to the resultant. Immediately thereafter, a liquid mixture containing 183.8 g of acrylonitrile, which is a nitrile group-containing monomer, 9.7 g of acrylic acid, which is a carboxy group-containing monomer, the content of the acrylic acid being 0.039 mol with respect to 1 mol of acrylonitrile, and 6.5 g of methoxy triethylene glycol acrylate (trade name: NK Ester AM-30G, manufactured by Shin Nakamura Chemical Co., Ltd.), which is a linear ether group-containing monomer, the content of the methoxy triethylene glycol acrylate being 0.0085 mol with respect to 1 mol of acrylonitrile, was added dropwise thereto for 2 hours while keeping the temperature of the system at 74°C $\pm$ 2°C. Subsequently, an aqueous solution obtained by dissolving 0.25 g of ammonium persulfate in 21.3 g of purified water was additionally added to the reaction system which was in a suspended form, and the temperature of the resultant was raised to 84°C, followed by allowing reaction to proceed for 2.5 hours while maintaining the temperature of the system at 84°C $\pm$2°C. Then, the resultant was cooled to 40°C for 1 hour. Thereafter, stirring was stopped and the resultant was cooled overnight at room temperature to obtain a reaction liquid in which a binder resin composition was precipitated. The reaction liquid was filtered by suction filtration, and the collected wet sediment was washed three times with 1800 g of purified water, vacuum-dried at 80°C for 10 hours, isolated, and purified to obtain a binder resin composition.

(Production of Electrode Assembly)

The prepared positive plate and negative plate were allowed to face each other with a polypropylene/polyethylene/polypropylene three-layer separator having a thickness of 30 $\mu$m, a width of 35 mm and a length of 50 mm therebetween, to produce a laminated electrode assembly.

(Preparation of Electrolytic Solution)

LiPF$_6$ as an electrolyte was dissolved at a concentration of 2.0 mol/L in a nonaqueous solvent obtained by mixing ethylene carbonate (EC) and dimethyl carbonate (DMC) (EC: DMC was 1: 9 in terms of volume ratio) to prepare an electrolytic solution.

(Production of Lithium-Ion Secondary Battery)

As illustrated in Fig. 1, the electrode assembly was housed in a battery outer package formed from a laminate film made of aluminum. An electrolytic solution was injected into the battery outer package, and the opening of the battery container was then sealed such that the positive electrode collector tab and the negative electrode collector tab extended to the exterior, to thereby produce a lithium-ion secondary battery. Here, the laminate film made of aluminum is a laminated body of polyethylene terephthalate (PET) film/aluminum foil/sealant layer (polypropylene or the like).

(Measurement of Positive Electrode Capacity and Negative Electrode Capacity)

-Measurement of Positive Electrode Capacity-

A lithium foil having a thickness of 0.5 mm, cut in a width of 31 mm and a length of 46 mm, was affixed to a copper mesh cut in a width of 31 mm and a length of 46 mm to form a counter electrode. A collector tab was attached to the counter electrode. The prepared positive plate and the counter electrode were allowed to face each other with a separator made of a polyethylene microporous membrane having a thickness of 30 $\mu$m, a width of 35 mm, and a length of 50 mm to produce a laminated electrode assembly. The electrode assembly was housed in a battery outer package formed from a laminate film made of aluminum, as illustrated in Fig. 1. An electrolytic solution was injected into the battery outer package, and the opening of the battery outer package was then sealed such that the positive electrode collector tab and the collector tab of the counter electrode extended to the exterior, to thereby produce a battery for measuring a positive electrode capacity. Here, the laminate film made of aluminum is a laminated body of polyethylene terephthalate (PET) film/aluminum foil/sealant layer (polypropylene or the like). As the electrolytic solution, an EC/DMC mixed solvent (EC: DMC was 3: 7 in terms of volume ratio) having a $LiPF_6$ concentration of 1.2 mol/L was used.

The positive electrode capacity was defined as a discharge capacity evaluated by performing charge and discharge with a voltage range set at from 4.95 V to 3.5 V and at a current set at 3.5 mA in constant-current charge and constant-current discharge. As a result of the measurement, the positive electrode capacity was 24 mAh.

-Measurement of Negative Electrode Capacity-

A battery for measuring a negative electrode capacity was produced in the same manner as in the measurement of the positive electrode capacity, except that a negative plate was used instead of the positive plate.

The negative electrode capacity was defined as a discharge capacity evaluated by performing charge and discharge with a voltage range set from 1.0 V to 2.0 V and at a current set at 3.5 mA in constant-current charge and constant-current discharge. As a result of the measurement, the negative electrode capacity was 17 mAh.

A capacity ratio (negative electrode capacity/positive electrode capacity) was calculated to be 0.7 based on the measurement results of the positive electrode capacity and the negative electrode capacity.

(Evaluation of Charge and Discharge Cycle Performance)

The constant-current charge of the lithium-ion secondary battery described above was performed using a charge/discharge device (BATTERY TEST UNIT, manufactured by IEM Co., Ltd.) at 25°C, with a current value of 0.2 C, and a charge cutoff voltage of 3.4 V. After resting for 15 minutes, constant-current discharge was performed at a current value of 0.2 C and a discharge cut-off voltage of 2.0 V. The charge and the discharge were repeated twice under the charge/discharge conditions described above. Then, constant-current charge was performed at 50°C with a current value of 1 C and a charge cutoff voltage of 3.4 V, and constant-voltage charge was then performed at a charging voltage of 3.4 V for the duration set forth in Table 1. A constant-voltage charge duration of "0 minutes" in Table 1 means that the charge was completed only with constant-current charge, without performing constant-voltage charge. After resting for 15 minutes, constant-current discharge was performed at a current value of 1 C and a discharge cut-off voltage of 2.0 V. The discharge capacity obtained at this time was regarded as an initial discharge capacity, and discharge capacity after repeating these procedures 200 times was measured (discharge capacity after 200 cycles). A cell voltage decay rate after the 200 cycles was calculated to obtain charge and discharge cycle performance based on the following Formula. The results are shown in Table 1.

$$\text{Charge and discharge cycle performance (\%)} = (\text{discharge capacity after 200 cycles/initial discharge capacity}) \times 100$$

[Comparative Example 3]

A lithium-ion secondary battery was produced, and charge and discharge cycle performance was evaluated in the same manner as in Example 1, except that a nonaqueous solvent obtained by mixing dimethyl carbonate (DMC) and diethyl carbonate (DEC) (DMC: DEC was 3: 7 in terms of volume ratio) was used. The results are shown in Table 1.

[Comparative Example 4]

A lithium-ion secondary battery was produced, and charge and discharge cycle performance was evaluated in the same manner as in Example 1, except that a nonaqueous solvent obtained by mixing propylene carbonate (PC) and diethyl carbonate (DEC) (PC: DEC was 3: 7 in terms of volume ratio) was used. The results are shown in Table 1.

[Comparative Example 5]

A lithium-ion secondary battery was produced, and charge and discharge cycle performance was evaluated in the same manner as in Example 5, except that a nonaqueous solvent obtained by mixing dimethyl carbonate (DMC) and diethyl carbonate (DEC) (DMC: DEC was 3: 7 in terms of volume ratio) was used. The results are shown in Table 1.

[Examples 7 to 12 and Comparative Examples 6 to 10]

Charge and discharge cycle performance was evaluated in the same manner as in Examples 1 to 6 and Comparative Examples 1 to 5, respectively, except that the charge cutoff voltage (constant-voltage charge voltage) was set at 3.5 V. The results are shown in Table 2.

[Examples 13 to 18 and Comparative Examples 11 to 15]

Charge and discharge cycle performance was evaluated in the same manner as in Examples 1 to 6 and Comparative Examples 1 to 5, respectively, except that the charge cutoff voltages (constant-voltage charge voltages) were set at 3.8 V. The results are shown in Table 3.

[Table 1]

| Duration of the constant-voltage charge | Voltage of the constant-voltage charge | 3.4 V |
|---|---|---|
| Example 1 | 0 minutes | 95% |
| Example 2 | 3 minutes | 91% |
| Example 3 | 5 minutes | 93% |
| Example 4 | 10 minutes | 94% |
| Example 5 | 15 minutes | 88% |
| Example 6 | 30 minutes | 92% |
| Comparative Example 1 | 45 minutes | 75% |
| Comparative Example 2 | 60 minutes | 63% |
| Comparative Example 3 | 0 minutes | 28% |
| Comparative Example 4 | 0 minutes | 22% |
| Comparative Example 5 | 15 minutes | 0% |

[Table 2]

| | Voltage of the constant-voltage charge / Duration of the constant-voltage charge | 3.5 V |
|---|---|---|
| Example 7 | 0 minutes | 88% |
| Example 8 | 3 minutes | 93% |
| Example 9 | 5 minutes | 89% |
| Example 10 | 10 minutes | 91% |
| Example 11 | 15 minutes | 91% |
| Example 12 | 30 minutes | 89% |
| Comparative Example 6 | 45 minutes | 71% |
| Comparative Example 7 | 60 minutes | 60% |
| Comparative Example 8 | 0 minutes | 25% |
| Comparative Example 9 | 0 minutes | 20% |
| Comparative Example 10 | 15 minutes | 0% |

[Table 3]

| | Voltage of the constant-voltage charge / Duration of the constant-voltage charge | 3.8 V |
|---|---|---|
| Example 13 | 0 minutes | 89% |
| Example 14 | 3 minutes | 88% |
| Example 15 | 5 minutes | 89% |
| Example 16 | 10 minutes | 90% |
| Example 17 | 15 minutes | 85% |
| Example 18 | 30 minutes | 80% |
| Comparative Example 11 | 45 minutes | 49% |
| Comparative Example 12 | 60 minutes | 32% |
| Comparative Example 13 | 0 minutes | 15% |
| Comparative Example 14 | 0 minutes | 13% |
| Comparative Example 15 | 15 minutes | 0% |

As can be understood from the results shown in Tables 1 to 3, Examples 1 to 18, in which the duration of the constant-voltage charge after the constant-current charge were 30 minutes or less, showed excellent charge and discharge cycle performance with charge and discharge cycle performance of more than 80%.

In contrast, the charge and discharge cycle performance of Comparative Example 1, Comparative Example 6, and Comparative Example 11, in which the duration of the constant-voltage charge after the constant-current charge was 45 minutes, and Comparative Example 2, Comparative Example 7 and Comparative Example 12, in which the duration of the constant-voltage charge after the constant-current charge was 60 minutes, was significantly low in comparison with that of Examples 1 to 18.

The charge and discharge cycle property of Comparative Examples 3 to 5, Comparative Examples 8 to 10, and Comparative Examples 13 to 15, in which the nonaqueous solvent did not include dimethyl carbonate, or the content of dimethyl carbonate was 70% by volume or less with respect to the total amount of the nonaqueous solvent, was significantly low in comparison with that of Examples 1 to 18, even though the duration of the constant-voltage charge was 30 minutes or less.

Reference Signs List

| | |
|---|---|
| 1 | Positive plate |
| 2 | Positive electrode collector tab |
| 3 | Negative plate |
| 4 | Negative electrode collector tab |
| 5 | Separator |
| 6 | Battery outer package |
| 10 | Lithium-ion secondary battery |
| 20 | Electrode assembly |

**Claims**

**1.** A method for charging a lithium-ion secondary battery, comprising:
charging a lithium-ion secondary battery by performing constant-current charge until a set voltage is reached, or by performing constant-current charge until a set voltage is reached followed by performing constant-voltage charge at the set voltage for 30 minutes or less, wherein the set voltage is from 3.4 V to 3.8 V, the lithium-ion secondary battery comprising:

a positive electrode comprising a positive electrode active material comprising a spinel-type lithium nickel manganese complex oxide;
a negative electrode comprising a negative electrode active material comprising a lithium titanium complex oxide; and
an electrolytic solution comprising a nonaqueous solvent comprising dimethyl carbonate,
wherein a content of the dimethyl carbonate is more than 70% by volume with respect to a total amount of the nonaqueous solvent, and a capacity ratio between a negative electrode capacity of the negative electrode and a positive electrode capacity of the positive electrode (negative electrode capacity/positive electrode capacity) is 1 or less.

**2.** The method for charging a lithium-ion secondary battery according to claim 1, wherein the negative electrode comprises a negative electrode active material comprising an active material that allows intercalation and deintercalation of lithium ions at a potential of 1.2 V or more compared to the lithium potential.

**3.** A lithium-ion secondary battery system comprising:

a lithium-ion secondary battery comprising a positive electrode comprising a positive electrode active material comprising a spinel-type lithium nickel manganese complex oxide; a negative electrode; and an electrolytic solution comprising a nonaqueous solvent comprising dimethyl carbonate, wherein a content of the dimethyl carbonate is more than 70% by volume with respect to a total amount of the nonaqueous solvent, and a capacity ratio between a negative electrode capacity of the negative electrode and a positive electrode capacity of the positive electrode (negative electrode capacity/positive electrode capacity) is 1 or less; and
a charge controller configured to charge the lithium-ion secondary battery by the method for charging according to claim 1 or 2.

**4.** A power storage device comprising the lithium-ion secondary battery system according to claim 3.

**Patentansprüche**

1. Verfahren zum Laden einer Lithium-Ionen-Sekundärbatterie, umfassend:
Laden einer Lithium-Ionen-Sekundärbatterie mittels Durchführung einer Aufladung mit konstantem Strom, bis eine festgelegte Spannung erreicht wird, oder mittels Durchführung einer Konstantstromladung, bis eine festgelegte Spannung erreicht wird, gefolgt von einer Durchführung einer Konstantspannungsladung bei der festgelegten Spannung für 30 Minuten oder weniger, wobei die festgelegte Spannung 3,4 V bis 3,8 V beträgt, wobei die Lithium-Ionen-Sekundärbatterie umfasst:

   eine positive Elektrode, umfassend ein positives Elektrodenaktivmaterial, umfassend ein Lithium-Nickel-Mangan-Mischoxid vom Spinell-Typ,
   eine negative Elektrode, umfassend ein negatives Elektrodenaktivmaterial, umfassend ein Lithium-Titan-Mischoxid, und
   eine elektrolytische Lösung, umfassend ein nicht-wässriges Lösungsmittel, umfassend Dimethylcarbonat,
   wobei ein Gehalt des Dimethylcarbonats mehr als 70 Vol.-% in Bezug auf eine Gesamtmenge des nicht-wässrigen Lösungsmittels beträgt und ein Kapazitätsverhältnis zwischen einer negativen Elektrodenkapazität der negativen Elektrode und einer positiven Elektrodenkapazität der positiven Elektrode (negative Elektrodenkapazität/positive Elektrodenkapazität) 1 oder weniger beträgt.

2. Verfahren zum Laden einer Lithium-Ionen-Sekundärbatterie gemäß Anspruch 1,
wobei die negative Elektrode ein negatives Elektrodenaktivmaterial umfasst, das ein Aktivmaterial umfasst, welches die Interkalation und Deinterkalation von Lithiumionen bei einem Potential von 1,2 V oder mehr, verglichen mit dem Lithiumpotential, ermöglicht.

3. Lithium-Ion-Sekundärbatteriesystem, umfassend:

   eine Lithium-Ionen-Sekundärbatterie, umfassend eine positive Elektrode, umfassend ein positives Elektrodenaktivmaterial, umfassend ein Lithium-Nickel-Mangan-Mischoxid vom Spinell-Typ, eine negative Elektrode und eine elektrolytische Lösung, umfassend ein nicht-wässriges Lösungsmittel, umfassend Dimethylcarbonat, wobei ein Gehalt des Dimethylcarbonats mehr als 70 Vol.-% in Bezug auf eine Gesamtmenge des nicht-wässrigen Lösungsmittels beträgt und ein Kapazitätsverhältnis zwischen einer negativen Elektrodenkapazität der negativen Elektrode und einer positiven Elektrodenkapazität der positiven Elektrode (negative Elektrodenkapazität/positive Elektrodenkapazität) 1 oder weniger beträgt, und
   einen Laderegler, der so konfiguriert ist, dass er die Lithium-Ionen-Sekundärbatterie durch das Verfahren zum Laden gemäß Anspruch 1 oder 2 lädt.

4. Energiespeichervorrichtung, umfassend das Lithium-Ionen-Sekundärbatteriesystem gemäß Anspruch 3.

**Revendications**

1. Procédé de charge d'un accumulateur lithium-ion, comprenant :
la charge d'un accumulateur lithium-ion par réalisation d'une charge à courant constant jusqu'à ce qu'une tension de consigne soit atteinte, ou par réalisation d'une charge à courant constant jusqu'à ce qu'une tension de consigne soit atteinte puis réalisation d'une charge à tension constante à la tension de consigne pendant 30 minutes ou moins, la tension de consigne étant de 3,4 V à 3,8 V, l'accumulateur lithium-ion comprenant :

   une électrode positive comprenant une matière active d'électrode positive comprenant un oxyde complexe de lithium-nickel-manganèse de type spinelle ;
   une électrode négative comprenant une matière active d'électrode négative comprenant un oxyde complexe de lithium-titane ; et
   une solution électrolytique comprenant un solvant non aqueux comprenant du carbonate de diméthyle,
   dans lequel une teneur en carbonate de diméthyle est supérieure à 70% en volume par rapport à une quantité totale du solvant non aqueux, et un rapport de capacité entre une capacité d'électrode négative de l'électrode négative et une capacité d'électrode positive de l'électrode positive (capacité d'électrode négative/capacité d'électrode positive) est inférieur ou égal à 1.

2. Procédé de charge d'un accumulateur lithium-ion selon la revendication 1, dans lequel l'électrode négative comprend une matière active d'électrode négative comprenant une matière active qui permet une insertion et une désinsertion d'ions lithium à un potentiel de 1,2 V ou plus comparativement au potentiel du lithium.

3. Système d'accumulateur lithium-ion comprenant :

un accumulateur lithium-ion comprenant une électrode positive comprenant une matière active d'électrode positive comprenant un oxyde complexe de lithium-nickel-manganèse de type spinelle ; une électrode négative ; et une solution électrolytique comprenant un solvant non aqueux comprenant du carbonate de diméthyle, dans lequel une teneur en carbonate de diméthyle est supérieure à 70 % en volume par rapport à une quantité totale du solvant non aqueux, et un rapport de capacité entre une capacité d'électrode négative de l'électrode négative et une capacité d'électrode positive de l'électrode positive (capacité d'électrode négative/capacité d'électrode positive) est inférieur ou égal à 1 ; et un contrôleur de charge configuré pour charger l'accumulateur lithium-ion par le procédé de charge selon la revendication 1 ou 2.

4. Dispositif de stockage d'électricité comprenant le système d'accumulateur lithium-ion selon la revendication 3.

# FIG.1

# FIG.2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005123090 A

- WO 2016060253 A1